# EUROPÄISCHE PATENTSCHRIFT

(11) **EP 3 490 843 B1**
(45) Veröffentlichungstag und Bekanntmachung des Hinweises auf die Patenterteilung: **01.04.2020**
(21) Anmeldenummer: 17732424.1
(22) Anmeldetag: 22.06.2017
(51) Int. Cl.: B60P 1/44, B62D 53/00, B66F 9/06, F41H 7/00

(54) **ROUTENZUGANHÄNGER UND TRANSPORTSYSTEM SOWIE TRANSPORTVERFAHREN**
TUGGER TRAIN TRAILER, TRANSPORT SYSTEM, AND TRANSPORT METHOD
REMORQUE POUR TRAIN DE REMORQUES DE MANUTENTION ET SYSTÈME DE TRANSPORT, AINSI QUE PROCÉDÉ DE TRANSPORT

(30) Priorität: 28.07.2016 DE 102016113972
(43) Veröffentlichungstag der Anmeldung: 05.06.2019
(73) Patentinhaber: LR Intralogistik GmbH, 84109 Wörth a. d. Isar (DE)
(72) Erfinder: PACKEISER, Andreas, 21427 Winsen (DE); BERGHAMMER, Fritz, 84028 Landshut (DE)
(74) Vertreter: Patentship Patentanwaltsgesellschaft mbH
(86) Internationale Anmeldenummer: PCT/EP2017/065432
(87) Internationale Veröffentlichungsnummer: WO 2018/019495

(56) Entgegenhaltungen:
- EP-A2- 2 803 562
- WO-A1-2015/149892
- DE-A1-102012 017 838
- JP-A- 2013 232 078
- US-A1- 2009 115 161
- US-A1- 2011 056 760

## Beschreibung

Die Erfindung betrifft einen Routenzuganhänger und ein Transportsystem sowie ein Transportverfahren. Insbesondere betrifft die Erfindung Routenzuganhänger mit einem Rahmen und Auffahrflächen zur Aufnahme eines Trolleywagens, ein zugehöriges autonomes Transportfahrzeug, ein zugehöriges Transportsystem und ein Transportverfahren.

Für den innerbetrieblichen Transport von Lasten, die auf Paletten, Gitterboxen oder Trolleywagen gelagert sind, werden zunehmend Routenzüge eingesetzt, bei denen die Paletten, Gitterboxen und insbesondere Trolleywagen auf Anhängern transportiert werden. Die Anhänger werden insgesamt zu einem Zug zusammengefasst von einem Industrieschlepper gezogen. Ein Trolleywagen ist dabei üblicherweise mit mindestens zwei Lenkrollen ausgerüstet und besitzt insgesamt vier Rollen. Dadurch können durch Mitarbeiter in der Produktion die Trolleywagen leicht von Hand in die gewünschte Position zur Entnahme der geladenen Last verschoben werden. Eine typische Ausführungsform besteht aus einem Gitterkorb oder Träger für mehrere Kunststoffschubladen für Kleinteile. Dabei werden bevorzugt die Trolleywagen in dem Routenzug nicht auf den eigenen Rollen bewegt, sondern angehoben, um eine bessere Spurführung der hintereinander laufenden Routenzuganhänger zu erreichen, wenn deren Rollen bzw. Achsen mit dem vollen Gewicht belastet werden.

Aus der EP 2 161 182 A2 ist ein Routenzuganhänger bekannt, mit dem ein Trolleywagen transportiert werden kann, der während des Transports angehoben wird.

Die WO 2015/149892 A1 offenbart einen gattungsgemäßen Routenzuganhänger mit einem Rahmen und Auffahrflächen zur Aufnahme eines Trolleywagens.

Bei bekannten Verfahren zur Zuführung von Waren, beispielsweise an Produktionsbänder, werden zunehmend solche Routenzüge eingesetzt, da anstatt einer Vielzahl von beispielsweise Gabelstaplern ein einziger Routenzug eine größere Warenmenge zuführen kann. Dabei fährt der Routenzug zu einer Absetzposition, an der Mitarbeiter die Trolleywagen aus den Routenzuganhängern herausfahren und in ihre endgültige gewünschte Position verbringen. Gleichzeitig oder anschließend werden die entleerten Trolleywagen bzw. Transportbehälter wieder auf den Routenzug verladen.

Dieses bekannte Verfahren führt dazu, dass ein relativ langer Aufenthalt an der Absetzposition erforderlich ist und ebenso ein relativ hoher Zeitaufwand seitens der Mitarbeiter.

Es ist weiterhin bekannt, fahrerlose Transportsysteme einzusetzen, die autonom ohne Fernbedienung oder Bedienung durch eine mitlaufende Person bzw. einen Fahrer selbstständig Zielorte innerhalb eines Betriebsgeländes anfahren. Insbesondere sind hierfür autonome Transportfahrzeuge bekannt, die einen Ladungsträger, beispielsweise eine Palette, eine Gitterbox, aber auch einen Trolleywagen transportieren können. Dabei erfolgt der Transport eines Trolleywagens in einer bekannten Ausführungsform in der Art, dass die autonomen Transportfahrzeuge sehr flach aufgebaut sind, als Unterflurfahrzeug unter den Trolleywagen verfahren können und diesen anheben. Ebenfalls bekannt ist es in einer weiteren Ausführungsform, dass autonome Transportfahrzeuge halb unter den Trolleywagen verfahren und über eine oberhalb des autonomen Transportfahrzeugs bzw. an der Unterseite des Trolleywagens angeordnete Kupplungsverbindung mit einer senkrechten Drehachse den Trolleywagen auf eigenen Rollen als Schleppfahrzeug bewegen.

Diese autonomen Transportfahrzeuge sind sehr kompakt aufgebaut und die Kapazität der Traktionsbatterie dieser Fahrzeuge ist daher allein aufgrund des zur Verfügung stehenden Bauvolumens sehr begrenzt. Nachteilig an diesem Stand der Technik ist daher, dass nur sehr reduzierte Geschwindigkeiten möglich sind. Es ergibt sich ein hohes Verkehrsaufkommen durch die autonomen Transportfahrzeuge mit ihren jeweiligen Lasten bzw. Trolleywagen aufgrund der erforderlichen großen Anzahl und da diese nur mit geringer Geschwindigkeit über die Fahrwege fahren können. Auch ergibt sich auf längeren Transportstrecken das Problem der häufig nur geringen Bodenfreiheit der autonomen Transportfahrzeuge und das Fehlen der Möglichkeit, Wege außerhalb von Hallen auf dem Betriebsgelände zu benutzen, die größere Unebenheiten aufweisen und dem Wetter ausgesetzt sind.

Die US 2009/115161 A1 offenbart ein autonomes Transportfahrzeug, das eine fahrbare Plattform ziehen kann. Das autonome Transportfahrzeug ist an einem Leitdraht geführt. Das autonome Transportfahrzeug ist als Unterflurfahrzeug ausgeführt, das unter die fahrbare Plattform gefahren werden kann und diese dann schleppt.

Der vorliegenden Erfindung liegt daher die Aufgabe zugrunde, einen Routenzuganhänger, ein Transportsystem, ein autonomes Transportfahrzeug und ein Transportverfahren zur Verfügung zu stellen, mit denen die zuvor genannten Nachteile vermieden werden können und die einen optimierten Einsatz der autonomen Transportfahrzeuge ermöglichen.

Diese Aufgabe wird durch einen Routenzuganhänger mit den Merkmalen des unabhängigen Patentanspruchs 1, ein autonomes Transportfahrzeug mit den Merkmalen des Anspruchs 9, ein Transportsystem mit den Merkmalen des Anspruchs 10 und ein Transportverfahren mit den Merkmalen des Anspruchs 13 gelöst. Vorteilhafte Weiterbildungen der Erfindung sind in den Unteransprüchen angegeben.

Die Aufgabe wird erfindungsgemäß dadurch gelöst, dass bei einem Routenzuganhänger mit einem Rahmen und Auffahrflächen zur Aufnahme eines Trolleywagens, weitere Transportfahrzeug-Auffahrflächen für einen den Trolleywagen bewegendes autonomes Transportfahrzeug vorgesehen sind, so dass eine Einheit aus Trolleywagen und autonomen Transportfahrzeug auffahren kann.

Vorteilhaft können durch den erfindungsgemäßen Routenzuganhänger große Wegstrecken in einem Routenzug zurückgelegt werden, ohne dass eine Traktionsbatterie des autonomen Transportfahrzeugs entladen wird. Allein im Bereich eines Bestimmungsorts bzw. Absetzpunkts erfolgt der Transport der Trolleywagen durch die autonomen Transportfahrzeuge und wird deren Traktionsbatterie belastet. Es ist auch denkbar, Trolleywagen einzusetzen, die die Ladung transportieren und zugleich selbstständig autonom fahren können. In einem solchen Fall sind das autonome Transportfahrzeug und der Trolleywagen identisch. Die autonomen Transportfahrzeuge mit den Trolleywagen haben nur noch kurze Strecken zurückzulegen. Durch die beschriebene Lösung der Aufgabe wird eine effektive Unterverteilung von Ladegütern an dem Absetzpunkt in Kombination mit einem effizienten Transport über größere Distanzen möglich. Durch die zusätzlich vorgesehenen Transportfahrzeug-Auffahrflächen wird es möglich, dass insbesondere die beschriebenen autonomen Transportfahrzeuge in Form von Unterflurfahrzeugen zusammen mit einem Trolleywagen auf den Routenzuganhänger auffahren können. Diese befinden sich typischerweise zwischen der Spur der außen angeordneten Rollen des Trolleywagen und können durch die zusätzlich vorgesehenen Transportfahrzeug-Auffahrflächen zusammen mit dem Trolleywagen diesen in eine Parkposition auf dem Routenzuganhänger bewegen.

Vorteilhaft bilden die Auffahrflächen und Transportfahrzeug-Auffahrflächen eine durchgehende Bodenfläche.

Es ergibt sich eine vorteilhaft große Fläche, mit der verschiedene Arten von Trolleywagen transportiert werden können.

In einer vorteilhaften Weiterbildung können die Auffahrflächen und Transportfahrzeug-Auffahrflächen bodengleich abgesenkt und angehoben werden.

In einer günstigen Ausgestaltung sind die Auffahrflächen und Transportfahrzeug-Auffahrflächen fest mit dem Rahmen verbunden und zwischen Rahmen und Rollen des Routenzuganhängers Hubvorrichtungen vorgesehen.

Es können elektrische Ladekontakte so angeordnet sein, dass das autonome Transportfahrzeug mit Gegenkontakten seine Traktionsbatterie in einer Parkposition in dem Routenzuganhänger laden kann.

Wenn die beschriebenen autonomen Transportfahrzeuge mit einem Trolleywagen vollständig auf den Routenzuganhänger auffahren, befinden sie sich in einer typischen Parkposition. Dabei wird im Regelfall die Kombination aus einem autonomen Transportfahrzeug und dem Trolleywagen immer in eine Richtung auffahren. Beispielsweise ist es sinnvoll, wenn das autonome Transportfahrzeug über eine Kupplungsverbindung den Trolleywagen schleppt, wenn die Einheit mit dem Trolleywagen voraus von dem autonomen Transportfahrzeug auf den Routenzuganhänger geschoben wird, da dann maximale Manövrierbarkeit gegeben ist.

Vorteilhaft sind die Ladekontakte so angeordnet, dass ein Kontakt nur bei einer korrekten Orientierung des autonomen Transportfahrzeugs erfolgt, insbesondere die Ladekontakte asymmetrisch zu einer Längsachse der Parkposition in einer Einfahrtrichtung des autonomen Transportfahrzeugs orientiert sind.

Dadurch wird vorteilhaft sichergestellt, dass keine falsche Polung erfolgen kann. Insbesondere, da wie zuvor beschrieben, die autonomen Transportfahrzeuge in der Einheit mit dem Trolleywagen zusammen im Regelfall in einer Richtung, zumeist "rückwärts" auf den Routenzuganhänger fahren, kann durch eine außersymmetrische Anordnung der Kontakte sichergestellt werden, dass eine richtige Polung erfolgt. Es ist auch denkbar, über die Kontakte festzustellen, ob das autonome Transportfahrzeug mit dem Trolleywagen die korrekte Parkposition bzw. Endposition auf dem Routenzuganhänger erreicht hat. Sobald eine Steuerung des autonomen Transportfahrzeugs einen elektrischen Verbindungskontakt feststellt, kann beispielsweise eine Fahrbewegung gestoppt werden.

Die Ladekontakte können über eine Kabelverbindung mit weiteren Routenzuganhängern und/oder einem Schleppfahrzeug verbunden werden, um aus einer Traktionsbatterie eines Schleppfahrzeugs die Ladekontakte mit Strom zu versorgen.

Dadurch erfolgt eine Zwischenladung der Traktionsbatterie der autonomen Transportfahrzeuge aus der großen Traktionsbatterie des Schleppfahrzeugs des Routenzuges. Es wird ein reibungsloser Dauerbetrieb der autonomen Transportfahrzeuge ermöglicht.

Vorteilhaft kann eine Mehrzahl von Trolleywagen aufgenommen werden.

Die Aufgabe wird auch gelöst durch ein autonomes Transportfahrzeug mit Gegenkontakten als elektrische Anschlüsse zum Laden einer Traktionsbatterie des Transportfahrzeugs, die mit Ladekontakten eines Routenzuganhängers zusammenwirken können, wie sie zuvor bei dem Routenzuganhänger beschrieben wurden.

Eine Lösung der Aufgabe besteht auch in einem Transportsystem aus mindestens einem Routenzuganhänger, wie er zuvor beschrieben wurde, und einem autonomen Transportfahrzeug, insbesondere einem autonomen Transportfahrzeug mit Gegenkontakten als elektrische Anschlüsse zum Laden einer Traktionsbatterie des Transportfahrzeugs, die mit Ladekontakten eines Routenzuganhängers zusammenwirken können, sowie mindestens einem Trolleywagen.

Es kann eine drahtlose Datenverbindung zwischen autonomen Transportfahrzeug und Routenzuganhänger vorgesehen sein.

Vorteilhaft kann über die Datenverbindung eine Verkehrssteuerung in Bezug auf das Hineinfahren der autonomen Transportfahrzeuge in den Routenzuganhänger und/oder Herausfahren aus dem Routenzuganhänger erfolgen.

Beispielsweise können Daten über die Parkposition und die Abmessungen des Routenzuganhängers übermittelt werden, so dass das autonome Transportfahrzeug den Trolleywagen in die optimale Parkposition bewegen kann. Weiter ist auch ein Datenaustausch über den Bestimmungsort der Ladung des Trolleywagens denkbar. Auf diese Art und Weise benötigen die autonomen Transportfahrzeuge keine ständige Datenverbindung mit einem zentralen System, sondern können sich die Informationen über die Relaisstation des Routenzuganhängers bzw. des Routenzuges holen.

Die Aufgabe wird auch gelöst durch ein Transportverfahren unter Verwendung eines zuvor beschriebenen Transportsystems, wobei mit einem Routenzug autonome Transportfahrzeuge mit jeweils einem Trolleywagen an einen Absetzpunkt gefahren werden, an dem für den jeweiligen umgebenden Bereich bestimmte Trolleywagen von dem autonomen Transportfahrzeug von dem Routenzuganhänger hinabgefahren werden und ihre Zielpunkte anfahren.

Dadurch ergibt sich vorteilhaft ein geringeres Verkehrsaufkommen. Die Sicherheit in dem Betriebsgelände wird erhöht. Über lange Strecken sind nur Routenzüge unterwegs und der Bereich, in dem sich eine Vielzahl von autonomen Transportfahrzeugen mit jeweils einem Trolleywagen bewegen, ist beschränkt auf die unmittelbare Umgebung des Absetzpunktes.

Es können auf den Routenzuganhänger zurückzutransportierende Trolleywagen auffahren, die an dem Absetzpunkt bereits bereit stehen.

Es ist sowohl möglich, dass die autonomen Transportfahrzeuge den Trolleywagen mit der Ladung absetzen und einen leeren Trolleywagen mitnehmen, um sodann mit demselben Routenzug wieder mitgenommen zu werden. Im Interesse eines schnelleren Durchflusses ist es jedoch auch denkbar, dass hier eine Taktung stattfindet und erst der nächste anfahrende Routenzug die autonomen Transportfahrzeuge wieder mitnimmt.

Weitere Vorteile und Einzelheiten der Erfindung werden anhand der in den schematischen Figuren dargestellten Ausführungsbeispiele näher erläutert. Hierbei zeigt
- Fig. 1: einen erfindungsgemäßen Routenzuganhänger mit autonomen Transportfahrzeugen und Trolleywagen,
- Fig. 2: den Routenzuganhänger der Fig. 1 in Seitenansicht,
- Fig. 3: den Routenzuganhänger der Fig. 1 mit einem herausgefahren Trolleywagen,
- Fig. 4: den Routenzuganhänger der Fig. 1 mit zwei herausgefahren Trolleywagen und
- Fig. 5: den Routenzuganhänger der Fig. 1 mit herausgefahrenen Trolleywagen.

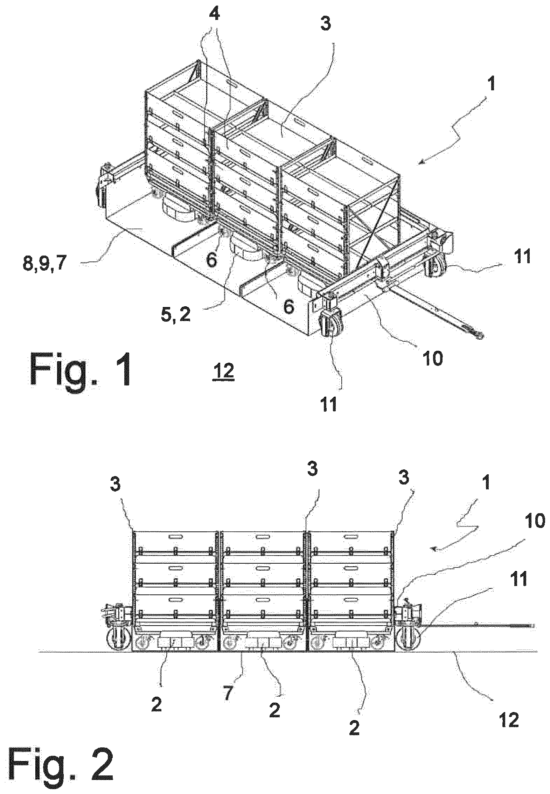

Die Fig. 1 zeigt einen erfindungsgemäßen Routenzuganhänger 1 mit autonomen Transportfahrzeugen 2 und Trolleywagen 3. Der Trolleywagen 3 ist so aufgebaut, dass er mehrere Schubladenfächer 4 für Lasten aufweist. Das autonome Transportfahrzeug 2 ist ein Unterflurfahrzeug 5 und steht an einer Seite über die Grundfläche des Trolleywagens 3 hinaus, wobei es zwischen zwei Trolleyrollen 6 positioniert ist. Der Trolleywagen 3 wird durch das autonome Transportfahrzeug 2 auf den eigenen Trolleyrollen 6 geschleppt.

Der Routenzuganhänger 1 weist eine Bodenfläche 7 auf, die zugleich als Auffahrfläche 8 für den Trolleywagen 3 und als Transportfahrzeug-Auffahrfläche 9 für das autonome Transportfahrzeug 2 dient. Die durchgehende Bodenfläche 7 ist mit einem umlaufenden Rahmen 10 des Routenzuganhängers 1 fest verbunden und Rollen 11 des Routenzuganhängers 1 sind über eine Hubvorrichtung an dem Rahmen 10 befestigt, sodass die Bodenfläche 7 bis auf die Ebene eines Untergrunds 12 abgesenkt werden kann. Es ist auch denkbar, einen Routenzuganhänger 1 ohne eine solche Hubvorrichtung vorzusehen, wenn die Trolleywagen 3 bzw. die autonomen Transportfahrzeuge 2 kleine Stufen- und Niveauunterschiede überwinden können. Die Einheiten aus autonomen Transportfahrzeug 2 und Trolleywagen 3 befinden sich in dieser Darstellung alle in der vollständig in den Routenzuganhänger 1 hineingefahrenen Parkposition, wobei die Einfahrt "rückwärts" erfolgt mit dem autonomen Transportfahrzeug 2 orientiert zur Ausfahrseite.

Die Fig. 2 zeigt den Routenzuganhänger 1 der Fig. 1 in Seitenansicht. Die Bodenfläche 7 ist niveaugleich bis zu dem Untergrund 12 abgesenkt, indem durch die nicht näher dargestellte Hubvorrichtung zwischen den Rollen 11 und dem Rahmen 10 der Rahmen 10 abgesenkt ist. Die drei auf dem Routenzuganhänger 1 angeordneten Trolleywagen 3 können jeweils von den autonomen Transportfahrzeugen 2 auf den Betrachter zu nach vorne herausgefahren werden.

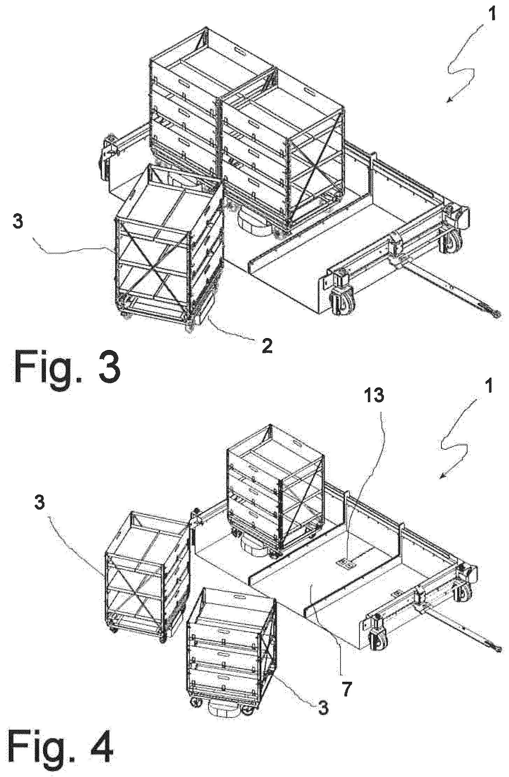

Die Fig. 3 zeigt den Routenzuganhänger der Fig. 1 mit einem herausgefahren Trolleywagen 3. An einer Absetzposition fährt die autonome Transporteinheit 2 den Trolleywagen 3 aus dem Routenzuganhänger 1 heraus.

Die Fig. 4 zeigt den Routenzuganhänger 1 der Fig. 1 mit zwei herausgefahren Trolleywagen 3. In diesem Ausführungsbeispiel sind in der Bodenfläche 7 Ladekontakte 13 angeordnet, die in der Parkposition der Einheit aus Trolleywagen 3 und autonomen Transportfahrzeug 2 mit nicht dargestellten Gegenkontakten des autonomen Transportfahrzeugs 2 ein Nachladen der Traktionsbatterie des autonomen Transpondertransportfahrzeugs 2 während des Aufenthalts in dem Routenzuganhänger 1 ermöglicht.

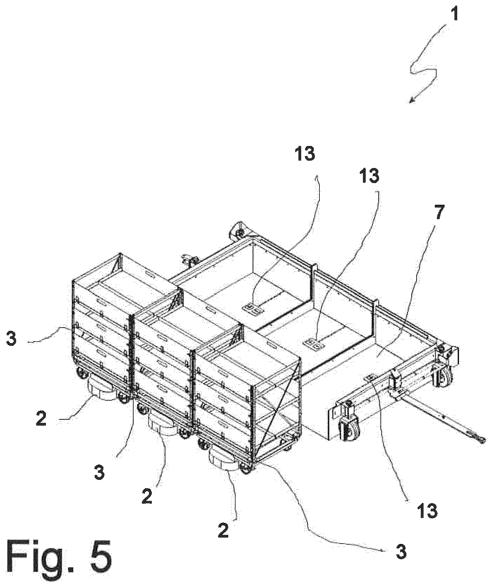

Die Fig. 5 zeigt den Routenzuganhänger 1 der Fig. 1 mit drei herausgefahrenen Trolleywagen 3. In der Bodenfläche 7 befindet sich jeweils für jedes der autonomen Transportfahrzeuge 2 ein Ladekontakt 13.

## Patentansprüche

1. Routenzuganhänger mit einem Rahmen (10) und Auffahrflächen (8) zur Aufnahme eines Trolleywagens (3),
**dadurch gekennzeichnet,**
**dass** weitere Transportfahrzeug-Auffahrflächen (9) für einen den Trolleywagen (3) bewegendes autonomes Transportfahrzeug (2) vorgesehen sind, so dass eine Einheit aus Trolleywagen (3) und autonomen Transportfahrzeug (2) auffahren kann.

2. Routenzuganhänger nach Anspruch 1,
**dadurch gekennzeichnet,**
**dass** die Auffahrflächen (8) und Transportfahrzeug-Auffahrflächen (9) eine durchgehende Bodenfläche (7) bilden.

3. Routenzuganhänger nach Anspruch 1 oder 2,
**dadurch gekennzeichnet,**
**dass** die Auffahrflächen (8) und Transportfahrzeug-Auffahrflächen (9) bodengleich abgesenkt und angehoben werden können.

4. Routenzuganhänger einem der Ansprüche 1 bis 3,
**dadurch gekennzeichnet,**
**dass** die Auffahrflächen (8) und Transportfahrzeug-Auffahrflächen (9) fest mit dem Rahmen (10) verbunden sind und zwischen Rahmen (10) und Rollen (11) des Routenzuganhängers (1) Hubvorrichtungen vorgesehen sind.

5. Routenzuganhänger einem der Ansprüche 1 bis 4,
**dadurch gekennzeichnet,**
**dass** elektrische Ladekontakte (13) so angeordnet sind, dass das autonome Transportfahrzeug (2) mit Gegenkontakten seine Traktionsbatterie in einer Parkposition in dem Routenzuganhänger (1) laden kann.

6. Routenzuganhänger nach Anspruch 5,
**dadurch gekennzeichnet,**
**dass** die Ladekontakte (13) so angeordnet sind, dass ein Kontakt nur bei einer korrekten Orientierung des autonomen Transportfahrzeugs (2) erfolgt, insbesondere die Ladekontakte (13) asymmetrisch zu einer Längsachse der Parkposition in einer Einfahrtrichtung des autonomen Transportfahrzeugs (2) orientiert sind.

7. Routenzuganhänger nach Anspruch 5 oder 6,
**dadurch gekennzeichnet,**
**dass** die Ladekontakte (13) über eine Kabelverbindung mit weiteren Routenzuganhängern (1) und/oder einem Schleppfahrzeug verbunden werden können, um aus einer Traktionsbatterie eines Schleppfahrzeugs die Ladekontakte mit Strom zu versorgen.

8. Routenzuganhänger nach einem der Ansprüche 1 bis 7,
**dadurch gekennzeichnet,**
**dass** eine Mehrzahl von Trolleywagen (3) aufgenommen werden kann.

9. Autonomes Transportfahrzeug mit Gegenkontakten als elektrische Anschlüsse zum Laden einer Traktionsbatterie des autonomen Transportfahrzeugs (2), die mit Ladekontakten (13) eines Routenzuganhängers (1) nach einem der Ansprüche 5 bis 8 zusammenwirken können.

10. Transportsystem aus mindestens einem Routenzuganhänger (1) nach einem der Ansprüche 1 bis 7 und einem autonomen Transportfahrzeug (2), insbesondere einem autonomen Transportfahrzeug (2) nach Anspruch 9, sowie mindestens einem Trolleywagen (3).

11. Transportsystem nach Anspruch 9,
**dadurch gekennzeichnet,**
**dass** eine drahtlose Datenverbindung zwischen autonomen Transportfahrzeug (2) und Routenzuganhänger (1) vorgesehen ist.

12. Transportsystem nach Anspruch 11,
**dadurch gekennzeichnet,**
**dass** über die Datenverbindung eine Verkehrssteuerung in Bezug auf das Hineinfahren der autonomen Transportfahrzeuge (2) in den Routenzuganhänger (1) und/oder Herausfahren aus dem Routenzuganhänger (1) erfolgen kann.

13. Transportverfahren unter Verwendung eines Transportsystems nach einem der Ansprüche 10 bis 12, wobei mit einem Routenzug autonome Transportfahrzeuge (2) mit jeweils einem Trolleywagen (3) an einen Absetzpunkt gefahren werden, an dem für den jeweiligen umgebenden Bereich bestimmte Trolleywagen (3) von dem autonomen Transportfahrzeug (2) von dem Routenzuganhänger (2) hinabgefahren werden und ihre Zielpunkte anfahren.

14. Transportverfahren nach Anspruch 13,
**dadurch gekennzeichnet,**
**dass** auf den Routenzuganhänger (1) zurückzutransportierende Trolleywagen (3) auffahren, die an dem Absetzpunkt bereits bereit stehen.

## Claims

1. Tugger train trailer with a frame (10) and drive-on surfaces (8) for receiving a trolley cart (3),
**characterized**
**in that** further transport-vehicle drive-on surfaces (9) are provided for an autonomous transport vehicle (2) moving the trolley cart (3), and therefore a unit consisting of trolley cart (3) and autonomous transport vehicle (2) can drive thereon.

2. Tugger train trailer according to Claim 1,
**characterized**
**in that** the drive-on surfaces (8) and transport-vehicle drive-on surfaces (9) form a continuous base surface (7).

3. Tugger train trailer according to Claim 1 or 2,
**characterized**
**in that** the drive-on surfaces (8) and transport-vehicle drive-on surfaces (9) can be lowered to floor level and raised.

4. Tugger train trailer according to one of Claims 1 to 3,
**characterized**
**in that** the drive-on surfaces (8) and transport-vehicle drive-on surfaces (9) are fixedly connected to the frame (10), and lifting devices are provided between frame (10) and rollers (11) of the tugger train trailer (1).

5. Tugger train trailer according to one of Claims 1 to 4,
**characterized**
**in that** electrical charging contacts (13) are arranged in such a manner that the autonomous transport vehicle (2) can use mating contacts to charge its traction battery in a parking position in the tugger train trailer (1).

6. Tugger train trailer according to Claim 5,
**characterized**
**in that** the charging contacts (13) are arranged in such a manner that contact takes place only in a correct orientation of the autonomous transmission vehicle (2), in particular the charging contacts (13) are oriented asymmetrically with respect to a longitudinal axis of the parking position in an entry direction of the autonomous transport vehicle (2).

7. Tugger train trailer according to Claim 5 or 6,
**characterized**
**in that** the charging contacts (13) can be connected to further tugger train trailers (1) and/or to a tractor vehicle via a cable connection in order to supply the charging contacts with power from a traction battery of a tractor vehicle.

8. Tugger train trailer according to one of Claims 1 to 7,
**characterized**
**in that** a plurality of trolley carts (3) can be accommodated.

9. Autonomous transport vehicle with mating contacts as electrical connections for charging a traction battery of the autonomous transport vehicle (2), which mating contacts can interact with charging contacts (13) of a tugger train trailer (1) according to one of Claims 5 to 8.

10. Transport system consisting of at least one tugger train trailer (1) according to one of Claims 1 to 7 and an autonomous transport vehicle (2), in particular an autonomous transport vehicle (2) according to Claim 9, and at least one trolley cart (3).

11. Transport system according to Claim 9,
**characterized**
**in that** a wireless data connection is provided between autonomous transport vehicle (2) and tugger train trailer (1).

12. Transport vehicle according to Claim 11,
**characterized**
**in that** the data connection can be used to control the traffic with regard to the driving of the autonomous transport vehicles (2) into the tugger train trailer (1) and/or driving same out of the tugger train trailer (1).

13. Transport method using a transport system according to one of Claims 10 to 12, wherein autonomous transport vehicles (2) each having a trolley cart (3) are driven by a tugger train to a drop-off point at which trolley carts (3) intended for the respective surrounding region are driven off the tugger train trailer (2) by the autonomous transport vehicle (2) and arrive at their destinations.

14. Transport method according to Claim 13,
**characterized**
**in that** trolley carts (3) which are to be transported back and are already available at the drop-off point are driven onto the tugger train trailer (1).

## Revendications

1. Remorque de train de traction comprenant un châssis (10) et des surfaces de chargement (8) pour recevoir un chariot (3),
**caractérisée en ce que**
des surfaces de chargement de véhicule de transport supplémentaires (9) pour un véhicule de transport (2) autonome déplaçant le chariot (3) sont prévues, de telle sorte qu'il soit possible de charger une unité constituée du chariot (3) et du véhicule de transport autonome (2).

2. Remorque de train de traction selon la revendication 1,
**caractérisée en ce que**
les surfaces de chargement (8) et les surfaces de chargement de véhicule de transport (9) forment une surface de plancher continue (7).

3. Remorque de train de traction selon la revendication 1 ou 2,
**caractérisée en ce que**
les surfaces de chargement (8) et les surfaces de chargement de véhicule de transport (9) peuvent être abaissées de plain-pied et relevées.

4. Remorque de train de traction selon l'une quelconque des revendications 1 à 3,
**caractérisée en ce que**
les surfaces de chargement (8) et les surfaces de chargement de véhicule de transport (9) sont connectées fixement au châssis (10) et des dispositifs de levage sont prévus entre le châssis (10) et des rouleaux (11) de la remorque de train de traction (1).

5. Remorque de train de traction selon l'une quelconque des revendications 1 à 4,
**caractérisée en ce que**
des contacts de charge électrique (13) sont disposés de telle sorte que le véhicule de transport autonome (2) puisse charger sa batterie de traction avec des contacts conjugués dans une position de stationnement dans la remorque de train de traction (1).

6. Remorque de train de traction selon la revendication 5,
**caractérisée en ce que**
les contacts de charge (13) sont disposés de telle sorte qu'un contact s'effectue seulement dans le cas d'une orientation correcte du véhicule de transport autonome (2), en particulier les contacts de charge (13) sont orientés de manière asymétrique par rapport à un axe longitudinal de la position de stationnement dans une direction d'entrée du véhicule de transport autonome (2).

7. Remorque de train de traction selon la revendication 5 ou 6,
**caractérisée en ce que**
les contacts de charge (13) peuvent être connectés par le biais d'un raccord de câble à des remorques de train de traction supplémentaires (1) et/ou à un véhicule tracteur afin d'alimenter en courant les contacts de charge à partir d'une batterie de traction d'un véhicule tracteur.

8. Remorque de train de traction selon l'une quelconque des revendications 1 à 7,
**caractérisée en ce**
**qu'**une pluralité de chariots (3) peuvent être reçus.

9. Véhicule de transport autonome comprenant des contacts conjugués en tant que raccords électriques pour le chargement d'une batterie de traction du véhicule de transport autonome (2), lesquels peuvent coopérer avec des contacts de charge (13) d'une remorque de train de traction (1) selon l'une quelconque des revendications 5 à 8.

10. Système de transport constitué d'au moins une remorque de train de traction (1) selon l'une quelconque des revendications 1 à 7 et d'un véhicule de transport autonome (2), en particulier d'un véhicule de transport autonome (2) selon la revendication 9, ainsi que d'au moins un chariot (3) .

11. Système de transport selon la revendication 9,
**caractérisé en ce**
**qu'**il est prévu une liaison de données sans fil entre le véhicule de transport autonome (2) et la remorque de train de traction (1).

12. Système de transport selon la revendication 11,
**caractérisé en ce**
**qu'**une commande de circulation peut s'effectuer par le biais de la liaison de données par rapport à l'entrée des véhicules de transport autonomes (2) dans la remorque de train de traction (1) et/ou à la sortie hors de la remorque de train de traction (1).

13. Procédé de transport utilisant un système de transport selon l'une quelconque des revendications 10 à 12, dans lequel, avec un train de traction, des véhicules de transport autonomes (2) ayant chacun un chariot (3) sont amenés à un point de dépose au niveau duquel des chariots (3) déterminés pour la région environnante respective sont déchargés de la remorque de train de traction (2) par le véhicule de transport autonome (2) et roulent jusqu'à leur destination.

14. Procédé de transport selon la revendication 13,
**caractérisé en ce que**
des chariots (3) devant être retransportés, qui sont déjà mis à disposition au point de dépose, sont chargés sur la remorque de train de traction (1).
